## Europäisches Patentamt

## European Patent Office

## Office européen des brevets

(19)

(11) Veröffentlichungsnummer: **0 127 728**

**A1**

(12)

# EUROPÄISCHE PATENTANMELDUNG

(21) Anmeldenummer: 84102007.6

(22) Anmeldetag: 25.02.84

(51) Int. Cl.³: **A 61 C 11/00**

(30) Priorität: 06.05.83 CH 2495/83

(43) Veröffentlichungstag der Anmeldung:
12.12.84 Patentblatt 84/50

(84) Benannte Vertragsstaaten:
AT BE DE FR GB IT LU NL SE

(71) Anmelder: Marty, Urs
Stötzlistrasse 62
CH-8707 Uetikon am See(CH)

(72) Erfinder: Marty, Urs
Stötzlistrasse 62
CH-8707 Uetikon am See(CH)

(74) Vertreter: Blum, Rudolf Emil Ernst et al,
c/o E. Blum & Co Patentanwälte Vorderberg 11
CH-8044 Zürich(CH)

(54) Artikulator.

(57) Zur Erzielung eines einfachen und kompakten Aufbaus, der dennoch eine Simulierung aller natürlichen Kaubewegungen ermöglicht, weist der Artikulator einen Sockel (1) und einen zu diesem allseitig beweglichen Lagerbock (14) für den das Oberkiefermodell tragenden Schwenkarm (15) auf, wobei Sockel und Lagerbock mittels einer Feder (7) an ihren Stützflächen (10, 21) aufeinanderpreßbar sind. Der Schwenkarm ist in dem Längsschlitz (27) des Lagerbocks gegen Federkraft quer zur Querachse (26) verschiebbar gelagert und wird von der Kurve (34) gegenüber dem Sockel beweglich geführt. Die Kurve und der zugehörige Taster (12) Sind Zwischen Schwenkarm und Sockel angeordnet.

Fig.6

EP 0 127 728 A1

- 1 -

Artikulator
----------

Die Erfindung betrifft einen Artikulator, mit einem an einem Sockel gehalterten Träger für ein Unterkiefermodel und mit einem um eine Querachse schwenkbar angelenkten Träger für ein Oberkiefermodell, wobei die Querachse in einem Aufsatzkörper verläuft, der gegenüber dem Sockel allseitig beweglich ist, und wobei der Sockel und der Aufsatz mit ihren Stützflächen durch ein in zur Querachse rechtwinkliger Längsachse wirkendes Spannmittel mit Feder so aufeinanderpressbar sind, dass durch Formschluss zwischen Sockel und Aufsatz eine definierte Stellung erreicht ist, wobei der schwenkbare Träger für das Oberkiefermodell mittels einer Kurve und einem Taster hierfür, gegenüber dem Sockel beweglich geführt ist, und wobei der Träger für das Oberkiefermodell in einem Schwenkarm gehaltert ist, der mittels der Querachse an einem Lagerbock gelagert ist, wobei Lagerbock und Schwenkarm den Aufsatzkörper bilden.

Ein solcher Artikulator ist durch die CH-PS 412 194 bekannt. Wird das Spannmittel geöffnet, so gelangen Aufsatzkörper und Sockel durch die beim Spannmittel vorhandene Feder ausserhalb einer formschlüssigen Verriegelung, so dass der Aufsatzkörper gegenüber dem Sockel sphärisch bewegbar ist. Letztere erlaubt natürlich eine Bewegung in den drei Achsen und auch Kombinationen dieser Bewegungen; es können aber nicht die natürlichen Kaubewegungen (Artikulation) simuliert werden, da der Unterkiefer ja nicht mit einem sphärischen Gelenk mit dem Oberkiefer verbunden ist. Um die natürlichen Kaubewegungen simulieren zu können, sind verschiedene Artikulatoren bekannt (CH-PS 346 319, 350 757, 437 629, 515 031 und 604 675). Allen diesen bekannten, vorerwähnten Artikulatoren ist gemeinsam, dass sie zwei im erheblichen Abstand voneinander liegende Gelenkpfannen auf einer Querachse aufweisen, wobei der Abstand dieser beiden Gelenkpfannen voneinander dem Abstand der natürlichen Gelenkpfannen beim Menschen entsprechen soll. So beträgt der Abstand dieser beiden Gelenkpfannen voneinander bei einem Ausführungsbeispiel 108 Millimeter. Diese Artikulatoren sind also verhältnismässig sperrig, erfordern durch die verlangte Präzision eine teure Fertigung in Stahl, bei Einhaltung feiner Toleranzen und sind deshalb in der konstruktiven Konzeption verhältnismässig aufwendig und teuer. Mit dem eingangs genannten bekannten Artikulator nach der CH-PS 412 194 sollten bereits die vorerwähnten Nachteile der anderen Art an Artikulatoren vermieden werden.

Es wird nunmehr die Schaffung eines Artikulators bezweckt, mit dem die Vorteile der beiden vorerwähnten Arten der bekannten Artikulatoren ohne ihre erwähnten Nachteile erreicht werden können.

Der erfindungsgemässe Artikulator ist dadurch kennzeichnet, dass der Schwenkarm bezüglich des Lagerbocks gegen die Kraft einer zweiten Feder quer zur Querachse verschiebbar geführt ist, und dass die Kurve und der Taster zwischen dem Schwenkarm und dem Sockel liegen.

Dieser Artikulator kann einen solchen einfachen, kompakten Aufbau haben, wie er durch die CH-PS 412 194 bekannt ist. Weiterhin können mit dem erfindungsgemässen Artikulator aber alle natürlichen Kaubewegungen (Artikulation) simuliert werden, wie es bisher nur mit der erläuterten anderen Art der Artikulatoren erreicht werden konnte, bei denen die beiden Lagerpfannen im erheblichen Abstand voneinander auf der Querachse liegen.

In der Zeichnung ist ein Ausführungsbeispiel des Erfindungsgegenstandes dargestellt. Es zeigen:

Fig. 1 den Artikulator in etwa natürlicher Grösse in einer Ansicht von vorn,

Fig. 2 den Artikulator, nach Figur 1 in einer um 90°C gedrehten Seitenansicht,

Fig. 3 eine Draufsicht auf den Artikulator nach den Figuren 1 und 2,

Fig. 4 eine Draufsicht auf einen Teil des Artikulators,

Fig. 5 den Artikulator von hinten in Ansicht, und

Fig. 6 eine schaubildliche Darstellung des Artikulators.

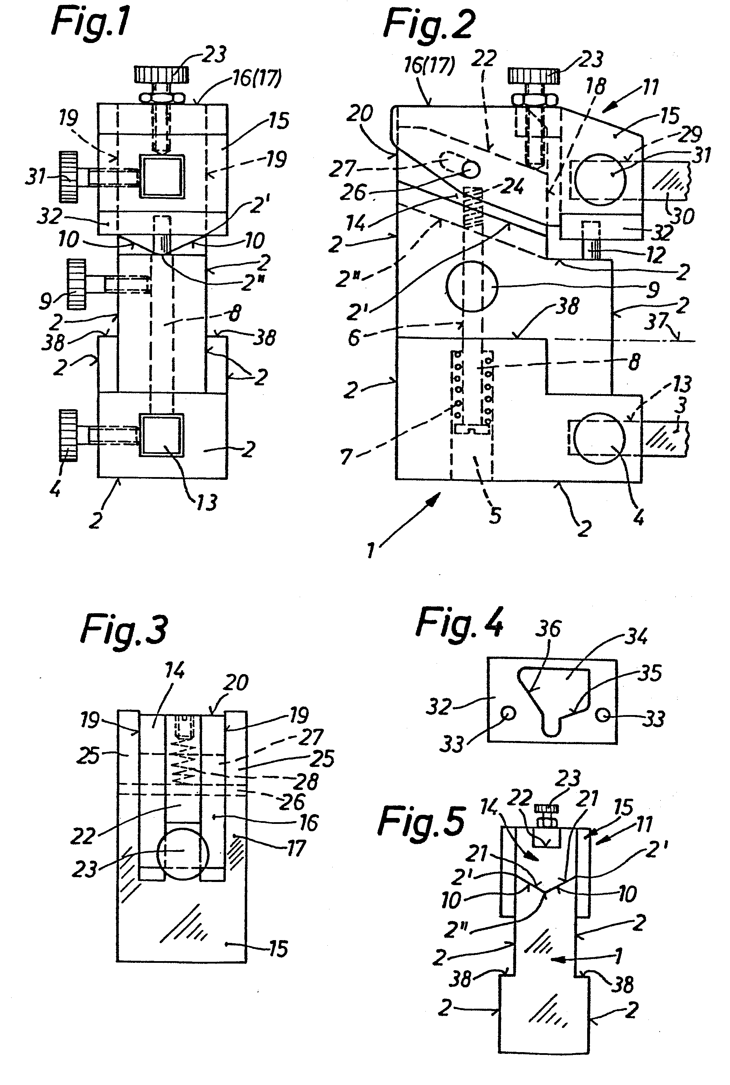

Der Artikulator hat einen Sockel 1 mit der Aussenkontur 2. Von diesem Sockel wird ein Träger 3 für ein nicht dargestelltes Unterkiefermodell mittels einer Klemmschraube 4 gehaltert. Der Sockel 1 kann z.B. aus einem Kunststoff bestehen. Der Sockel 1 hat ein Sackloch 5 und eine konzentrisch hierzu liegende Durchgangsbohrung 6 für eine im Sockel 1 gegen die Kraft einer Schraubendruckfeder 7 verschiebbar geführte Längsachse 8. Die Längsachse 8 kann mittels einer Klemmschraube 9 unverschiebbar am Sockel 1 festgeklemmt werden. Die obere Stirnfläche des Sockels 1 ist als Stützfläche 10 für einen Aufsatzkörper 11 ausgebildet. Diese Stützfläche 10 verläuft in Figur 2 von der Kontur 2' bis zur Kontur 2". Diese Konturen sind auch aus Figur 1 und 5 ersichtlich. Die Stützfläche 10 liegt im Bereich von 15° bis 25° in Figur 2 bezüglich der Horizontalen, wobei beim Beispiel ein Winkel von 20° gewählt wurde. Die zwischen dem nicht dargestellten Unterkiefermodell und Oberkiefermodell verlaufende Okklusionsebene verläuft in den Figuren 1 und 2 in einer Horizontalen, so dass also die Stützfläche 10 und damit ihre Längsseiten, nämlich die Konturen 2' und 2", unter diesem Winkel von 20° bezüglich der genannten Okklusionsebene geneigt sind und zwar von vorn unten nach hinten oben, wobei die vordere Seite des Artikulators in der Darstellung nach Figur 2 auf der rechten Seite liegt. Die Stützfläche 10 vom Sockel 1 verläuft zusätzlich noch V-förmig, wie aus den Figuren 1, 5 und 6 ersichtlich ist. Die Schenkel der V-Form schliessen einen Winkel im Bereich von 120° - 140° ein, wobei beim Beispiel dieser Winkel 130° beträgt. Der Sockel 1 weist noch einen vertikal stehenden Stift 12 auf, der in später erläuterter Weise als Taster für eine Kurve dient. Der Stift 12 besteht zweckmässigerweise aus einem Metall. In einer Oeffnung 13 des Sockels 1 kann ebenfalls eine aus Metall bestehende, nicht dargestellte Führungsbüche eingesetzt sein, in die der Träger 3 eingeschoben wird. Der übrige Teil des Sockels 1 kann z.B. aus Nylon bestehen.

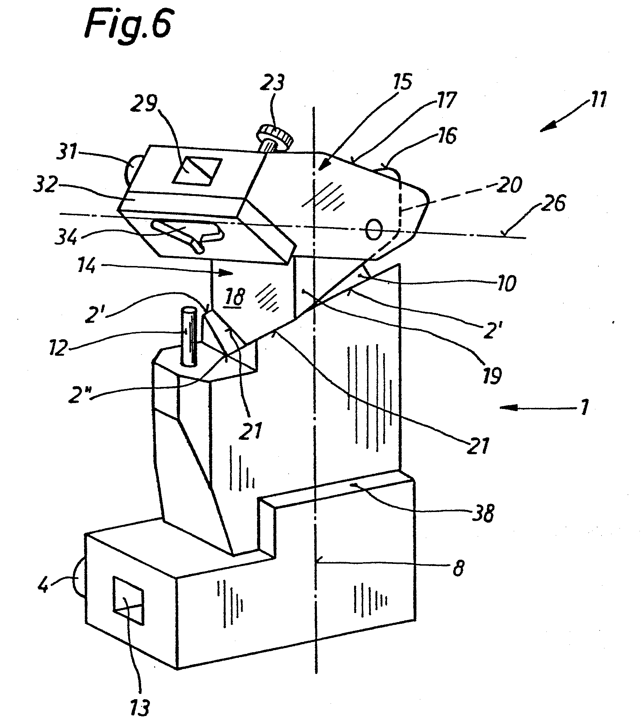

Im folgenden wird nunmehr der Aufsatzkörper 11 erläutert. Der Aufsatzkörper 11, im folgenden auch Aufsatz genannt, ist zweiteilig und besteht aus einem Lagerbock 14 und einem Schwenkarm 15. In der Lage des Artikulators nach den Figuren 1 und 2 fallen die oberen Flächen 16 und 17 vom Lagerbock 14 und Schwenkarm 15 zusammen. Der Lagerbock 14 hat weiterhin noch Aussenflächen 18, 19, 20 und 21. Die Flächen 21 vom Lagerbock 14 stellen Stützflächen des Aufsatzes 11 gegenüber dem Sockel 1 dar und korrespondieren deshalb mit den Stützflächen 10 vom Sockel 1. Das bedeutet, dass die Stützflächen 21 vom Aufsatz 11 auch V-förmig sind, wobei der eingeschlossene Winkel im Bereich von 120° - 140°, im gezeigten Beispiel bei 130° liegt. In den Figuren 1, 2 und 5 sitzen die Stützflächen 10 und 21 vom Sockel 1 und vom Aufsatz 11 formschlüssig aufeinander, wogegen in Figur 6 dieser Formschluss aufgehoben ist. Es soll bei dieser Gelegenheit erwähnt werden, dass der Formschluss zwischen den Flächen 10 und 21 mittels der Feder 7 bei der Längsachse 8 erzielt wird, dass also die Stellung nach Figur 6 gegen die Kraft dieser Feder 7 eingenommen werden kann.

Der Lagerbock 14 hat oben eine Schräge 22, an die eine im Schwenkarm sitzende Stellschraube 23 anlegbar ist. Hierdurch wird die Okklusion vom Unterkiefermodell und Oberkiefermodell eingestellt, d.h. der Abstand zwischen diesen beiden Kiefermodellen kann verändert werden. Die erwähnte Längsachse 8 ist mit ihrem Gewinde 24 im Lagerbock 14 mit Festsitz eingeschraubt. Durch die Druckfeder 7 wird also der Lagerbock 14 mit seinen Stützflächen 21 an die Stützflächen 10 des Sockels 1 angedrückt, so dass die in den Figuren 1, 2 und 3 gezeigte, definierte Stellung zwischen Sockel 1 und Aufsatz 11 durch Formschluss der V-förmigen Flächen 10 und 21 erreicht wird. Die Längsachse 8 stellt zusammen mit ihrer Feder 7 ein in dieser Längsachse wirkendes Spannmittel dar, durch das die Stützflächen 10 und 21 aufeinander gepresst werden.

Der Schwenkarm 15 hat ein hinteres gegabeltes Ende mit den Schenkeln 25 (Figur 3). Dieses gabelförmige Ende umgreift den innenliegenden Lagerbock 14, wobei die Gabelschenkel 25 mit ihren Innenflächen an den Aussenflächen 19 des Lagerbocks 14 geführt sind. Schwenkarm 15 und Lagerbock 14 stehen über eine Querachse 26, einen Längsschlitz 27 und eine zweite Feder 28 miteinander in Verbindung. Die Querachse 26 sitzt axial und radial fixiert im Schwenkarm 15. Der Längsschlitz 27 befindet sich im Lagerbock 14, wobei der Längsschlitz 27 unter einem Winkel im Bereich von 15° bis 25°, beim dargestellten Beispiel unter einem Winkel von 20° von Okklusionsebene von vorn unten nach hinten oben geneigt ist. Das bedeutet, dass der Längsschlitz 27 parallel zur Neigung der Stützflächen 10 und 21 verläuft. Die beim Beispiel verwendete Schraubendruckfeder 28 ist einerends am Lagerbock 14 und andererends an der Querachse 26 abgestützt (Figur 3). Es ist hieraus ersichtlich, dass der Schwenkarm 15 gegen die Kraft der zweiten Feder 28 bezüglich des Lagerbocks 14 bewegbar ist, wobei die Querachse 26 im Längsschlitz 27 quer verschoben wird. Bei dieser Verschiebebewegung des Schwenkarms 15 gegenüber dem Lagerbock 14 erfolgt die erwähnte Verschiebung der Innenflächen der Gabelschenkel 25 gegenüber den Aussenflächen 19 vom Lagerbock 14 in Figur 3. Anstelle der Schraubendruckfeder 28 könnte natürlich auch eine Blattfeder verwendet werden.

Der Schwenkarm 15 hat eine Ausnehmung 29, in die ein Träger 30 für ein nicht dargestelltes Oberkiefermodell einsetzbar ist. Dieser Träger 30 wird mittels einer Klemmschraube 31 am Schwenkarm 15 und somit auch am Aufsatz 11 gehaltert. Der Schwenkarm 15 trägt ein auswechselbares Plättchen 32, das mittels Stiften, die in Löchern 33 sitzen, am Schwenkarm 15 befestigt ist. Das Plättchen 32 weist eine innenliegende Kurve 34 mit den beiden Kurvenflächen 35 und 36 auf. Aus Figur 4 ist die Kurve 34 ersichtlich. Die beiden Schrägen 35 und 36 sind in unterschiedlichen Winkeln in Figur 4 zur Horizontalen geneigt. Diese Bedeutung wird später noch erläutert. In Figur 2 ist die erwähnte Okklusionsebene 37 angedeutet; sie liegt in Figur 2 horizontal zwischen den beiden Trägern 3 und 30.

Die Längsache 8 und der Stift 12 liegen rechtwinklig hierzu. Die Querachse 26 liegt parallel zur Ebene 37. Das Plättchen 32 ist so auswechselbar am Schwenkarm 15 befestigt, dass es auch so am Schwenkarm 15 befestigt werden kann, dass in der Darstellung nach Figur 4 dann die Schräge 35 links und die Schräge 36 rechts gegenüber der in Figur gezeigten Stellung liegt. Die jeweilige auswechselbare Lage des Plättchens 31 am Schwenkarm 15 ist abhängig davon, ob ein linkes oder rechtes Kiefermodell vom Artikulator getragen werden soll. Figur 4 ist eine Ansicht gemäss Figur 2 von unten her auf das Plättchen 32. Die aus Figur 4 ersichtlich montierte Lage des Plättchens 32 am Schwenkarm 15 zeigt diejenige Stellung, die verwendet wird, wenn ein linkes Kiefermodell vom Artikulator getragen werden soll.

Aus Figur 2 ist ersichtlich, dass das auswechselbare Plättchen 32 in eine zur Okklusionsebene 37 parallele Ebene schwenkbar ist. Der als Stift ausgebildete Taster, der unbeweglich mit dem Sockel 1 verbunden ist, gelangt beim Arbeiten mit dem Artikulator zur Anlage an den Schrägen 35 und 36 der Kurve 34. Hierzu muss also der Aufsatz 11 gegenüber dem Sockel 1 bewegt werden. Dies bedeutet, dass die Träger 3 und 30 gegeneinander bewegt werden, was wiederum bedeutet, dass die von diesen Trägern getragenen Kiefermodelle gegeneinander bewegt werden, um die natürlichen Kaubewegungen (Artikulation) zu simulieren. Wie dies erfolgt, wird im folgenden erläutert.

Der Aufsatz 11 ist egenüber dem Sockel 1 allseitig beweglich, d.h. in den drei räumlichen Achsen. In der einen Achse ist der Aufsatz 11 in Figur 2 gegen die Kraft der Feder 7 in der Zeichenblattebene beweglich. Rechtwinklig hierzu ist in Figur 2 der Aufsatz 11 gegen die Kraft der in Figur 3 dargestellten zweiten Feder 28 ebenfalls in Figur 2 in der Zeichenblattebene beweglich. Der dritte Freiheitsgrad wird erreicht, wenn der Aufsatz 11 gegenüber dem Sockel 1 um die Längsachse 8 gedreht wird, dies also in Figur 2 in einer zur Zeichenblattebene rechtwinklig stehenden Ebene. Bei der letztgenannten Bewegung wird der Formschluss zwischen den Stützflächen 10 und 21 von Sockel und Aufsatz 11 aufgehoben, wie aus Figur 6 ersichtlich ist. Die erläuterten drei Freiheitsgrade in der Bewegung des Aufsatzes 11 gegenüber dem Sockel 1 werden nunmehr in ihren Bewegungskomponenten durch die Kurve 34 und den zugeordneten Taster 12 gesteuert, um die natürliche Kaubewegung (Artikulation) zu simulieren. Um die unterschiedlichen Winkel der Schrägen 35 und 36 in Figur 4 gegenüber der Horizontalen zu erläutern, wird auf die eingangs genannte Art der Artikulatoren verwiesen, bei der zwei Lagerpfannen im erheblichen Abstand zueinander auf der Querachse liegen. Wird nunmehr mit einem solchen bekannten Artikulator ein linkes oder rechtes Kiefermodell getragen, liegt dieses linke oder rechte Kiefermodell nicht in der Mitte zwischen den beiden Gelenkpfannen sondern mehr bei der linken Gelenkpfannne oder mehr bei der rechten Gelenkpfanne, wie es natürlich auch am Kopf des Menschen der Fall ist. Die Artikulationsbewegung zwischen einem oberen und unteren Zahn ist also jeweils abhängig von der Lage dieser beiden zusammenwirkenden Zähne bezüglich der beiden Lagerpfannen zwischen Unterkiefer und Oberkiefer. Die jeweilige Lage des linken Kiefermodells oder des rechten Kiefermodells bezüglich der beiden erläuterten Lagerpfannen wird nunmehr durch die beiden unterschiedlichen Schrägen 35 und 36 berücksichtigt. Wird mit dem dargestellten Artikulator ein linkes Unterkiefermodell und Oberkiefermodell bearbeitet, wo wird der Aufsatz 11 so gegenüber dem Sockel 1 bewegt, dass die Schrägen 35 und 36 entlang dem Taster 1 bewegt werden. Hierbei wird der Schwenkarm 15 gegen die Kraft der Feder 28 gegenüber dem Lagerbock 14 bewegt, und der Lagerbock 14 wird wiederum gegenüber dem Sockel 1 bewegt. Aus Figur 6 ist eine solche verdrehte Stellung des Lagerbocks 14 gegenüber dem Sockel 1 ersichtlich, wobei wegen einer deutlichen Darstellung allerdings der Schwenkarm 15 mit seiner Kurve 34 vom Taster 12, anders als in der Praxis, weggeschwenkt worden ist.

Der dargestellte Artikulator kann auf einfache Weise so ausgebildet werden, dass der Sockel 1 in der Höhe verstellbar ist. Diese Ausführungsform ist nicht dargestellt. Sie kann einfach derart realisiert werden, dass der Sockel 1 in einer in Figur 2 horizontalen Ebene in zwei Stücke unterteilt wird, die entlang von zwei in Figur 2 vertikal stehenden, nicht dargestellten Führungsstiften zusammenschiebbar oder auseinanderziehbar sind. Zur Aufhebung dieser Verschiebbarkeit, kann eine Klemmschraube vorgesehen werden, die direkt auf die Führungsstifte wirkt.

Der erläuterte Artikulator wird hauptsächlich für Teilabdrücke (Quetschbisse) verwendet, kann aber auch für ganze Abdrücke verwendet werden. Der erfindungsgemässe Artikulator ist so aufgebaut, dass bei Teilabdrücken, trotz den fehlenden zwei im Abstand voneinander liegenden Gelenkpfannen auf der Querachse, die Simulation der Kaubewegungen des ganzen Kiefers auf den linken oder rechten Seitenzähnen bis zum Eckzahn nachgeahmt werden kann. Durch einfaches Umstecken des Plättchens 32 können somit die Kaubewegungen des linken oder rechten Kiefergelenkes nachgeahmt werden. Die aus Figur 4 ersichtlichen Winkel der Schräge 35 bezügliche der Horizontalen und der Schräge 36 bezüglich der Horizontalen resultieren aus dem Mittelwert der Bewegungswinkel des menschlichen Kiefergelenks. Die Schräge 35 schliesst in Fig. 4 mit der Horizontalen einen Winkel von 20° ein, und die Schräge 36 schliesst mit der Horizontalen einen Winkel von 57° ein.

Bei einem anderen Ausführungsbeispiel kann das auswechselbare Plättchen 32 auch am Sockel 1 befestigt werden, wobei dann der Taster 12 am Schwenkarm befestigt wird. Bei einem weiteren Ausführungsbeispiel kann die Kurve 34 ein anderes Aussehen haben, so dass das auswechselbare Plättchen 32 nicht mehr umgeklappt werden muss, sondern lediglich innerhalb seiner Ebene gedreht werden muss.

In den Figuren 3 und 5 sind die in den Figuren 1 und 2 gezeigten Klemmschrauben 4, 9 und 31 nicht dargestellt. Die Okklusionsebene 37 liegt in der Ebene der Sockelfläche 38.

Patentansprüche
----------------

1. Artikulator, mit einem an einem Sockel (1) gehalterten Träger (3) für ein Unterkiefermodell und mit einem um eine Querachse (26) schwenkbar angelenkten Träger (30) für ein Oberkiefermodell, wobei die Querachse (26) in einem Aufsatzkörper (11) verläuft, der gegenüber dem Sockel (1) allseitig beweglich ist, und wobei der Sockel (1) und der Aufsatz (11) mit ihren Stützflächen (10, 21) durch ein in zur Querachse (26) rechtwinkliger Längsachse (8) wirkendes Spannmittel (8, 7, 24) mit Feder (7) so aufeinanderpressbar sind, dass durch Formschluss zwischen Sockel (1) und Aufsatz (11) eine definierte Stellung erreicht ist, wobei der schwenkbare Träger (30) für das Oberkiefermodell mittels einer Kurve (34) und einem Taster (12) hierfür, gegenüber dem Sockel (1) beweglich geführt ist, und wobei der Träger (30) für das Oberkiefermodell in einem Schwenkarm (15) gehaltert ist, der mittels der Querachse (26) an einem Lagerbock (14) gelagert ist, wobei Lagerbock (14) und Schwenkarm (15) den Aufsatzkörper (11) bilden, dadurch gekennzeichnet, dass der Schwenkarm (15) bezüglich des Lagerbocks (14) gegen die Kraft einer zweiten Feder (28) quer zur Querachse (26) verschiebbar geführt ist, und dass die Kurve (34) und der Taster (12) zwischen dem Schwenkarm (14) und dem Sockel (1) liegen.

2. Artikulator nach Anspruch 1, dadurch gekennzeichnet, dass die Stützflächen (10, 21) von Sockel (1) und Lagerbock (14) in einem Winkel im Bereich von 15 - 25° zur Okklusionsebene (37) von vorn unten nach hinten oben geneigt sind.

3. Artikulator nach Anspruch 1, dadurch gekennzeichnet, dass die Stützflächen (10, 21) von Sockel (1) und Lagerbock (14) V-förmig sind, wobei die Schenkel der V-Form einen Winkel im Bereich von 120 - 140° einschliessen.

4. Artikulator nach Anspruch 1, dadurch gekenn-

zeichnet, dass die Querachse (26) in einem Längsschlitz (27) querverschiebbar ist, der in einem Winkel im Bereich von 15 - 25° zur Okklusionsebene (37) von vorn unten nach hinten oben geneigt ist.

5. Artikulator nach Anspruch 1, dadurch gekennzeichnet, dass der Taster (12) als Stift ausgebildet ist, der zusammen mit der Längsachse (8) in einer Ebene liegt.

6. Artikulator nach Anspruch 1, dadurch gekennzeichnet, dass die Kurve (34) als Innenwandung einer Ausnehmung eines auswechselbaren Plättchens (32) ausgebildet ist, wobei das Plättchen (32) in zwei verschiedenen Lagen am Aufsatz (11) montierbar ist, je nachdem ob ein linkes oder rechtes Kiefermodell vom Artikulator getragen werden soll.

7. Artikulator nach Anspruch 6, dadurch gekennzeichnet, dass das auswechselbare Plättchen (32) am Schwenkarm (15) angebracht und in eine zur Okklusionsebene (37) parallele Ebene schwenkbar ist, und dass der als Stift ausgebildete Taster (12) quer zur Okklusionsebene (37) liegt.

8. Artikulator nach Anspruch 4, wobei die Querachse (26) axial und radial fixiert im Schwenkarm (15) sitzt, dadurch gekennzeichnet, dass die zweite Feder (28) einerseits an der Querachse (26) und andererseits am Lagerbock (14) abgestützt ist und dass der Längsschlitz (27) im Lagerbock (14) vorhanden ist, zum Verschieben der Querachse (26) im Längsschlitz (27) gegen die Kraft der zweiten Feder (28) von vorn unten nach hinten oben.

9. Artikulator nach Anspruch 1, dadurch gekennzeichnet, dass der Sockel (1) in der Höhe verstellbar ist.

Fig.1

Fig.2

Fig.3

Fig.4

Fig.5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | CH-A- 412 194 (DIETRICH) <br> * Seite 2, Zeilen 29-83 * <br><br> --- | 1 | A 61 C 11/00 |
| A | US-A-4 175 325 (BECKWITH) <br> * Spalte 2, Zeile 63 - Spalte 3, Zeile 34; Figuren 1-3 * <br><br> --- | 1,4,8 | |
| A | DE-A-1 964 157 (FA. W. STENNER) <br> * Ansprüche 1, 4, 6, 7; Figur 1 * <br><br> --- | 1,8 | |
| A | DE-B-2 302 086 (DAUB) <br><br> --- | | |
| A | DE-C-1 035 316 (CAVIEZEL et al.) <br><br> --- | | RECHERCHIERTE SACHGEBIETE (Int. Cl. ³) |
| A | US-A-1 343 691 (STANBROUGH) <br><br> --- | | A 61 C 11/00 |
| D,A | CH-A- 437 629 (WEBER) <br><br> --- | | |
| D,A | CH-A- 346 319 (GERBER) <br><br> ----- | | |

Der vorliegende Recherchenbericht wurde für alle Patentansprüche erstellt.

| Recherchenort <br> BERLIN | Abschlußdatum der Recherche <br> 26-07-1984 | Prüfer <br> SIMON J J P |
|---|---|---|